# EUROPEAN PATENT APPLICATION

(11) **EP 4 432 179 A1**
(43) Date of publication of application: **18.09.2024**
(21) Application number: 23162368.7
(22) Date of filing: 16.03.2023
(51) Int. Cl.: G06Q 10/06

(54) **EFFICIENT SHOP FLOOR MANAGEMENT WITH INTEGRATED LOGISTICS, INPUT MATERIAL ADMINISTRATION AND NON-UNIT LOT SIZES**

(71) Applicant: Siemens Aktiengesellschaft, 80333 München (DE)
(72) Inventor: Gottschalk, Corinna, 81379 München (DE); Fink, Rafael, 81829 München (DE)
(74) Representative: Siemens Patent Attorneys

(57) **Abstract**

The present invention concerns a method of determining a schedule for a shop floor (100), the shop floor (100) comprising a plurality of automated machine arrangements (105), each machine arrangement (105) being associated to one or more transfer stations (115), a plurality of transport devices (110) being controllable to move containers for material between transfer stations (115) of the machine arrangements (105) and/or of one or more buffer areas (120), the method comprising: receiving (S10) order information representing one or more orders, the order information indicating a number of units of a final product to be produced for each of the one or more orders; determining (S12) a schedule for operating one or more of the transport devices (110) and one or more of the machine arrangements (105) based on generating transport options pertaining to the order information; and providing (S14) the schedule for automated execution. The invention also pertains to related devices.

## Description

The present invention concerns scheduling for a shop floor, and automated operation of the shop floor and/or components thereof based on the schedule.

### Background of the Invention

In the context of industry 4.0, shop floor production environments increasingly feature machines which can operate autonomously, allowing highly automated or even fully automated production processes. Such systems may be intended to operate with a low volume high mix product structure, such that for example a variety of different products may be provided, often in relatively low numbers, at least compared to high volumes provided by dedicated production plants. Due to the high variety in requirements for different products, the question how to organize and control the production on the shop floor is complex. A good, automated solution for this challenge can greatly increase efficiency.

### Disclosure of the Invention

A problem underlying the invention consists in providing an improved technique to operate a shop floor, in particular automatically providing an executable schedule, preferably without human intervention.

The invention solves the given problem by means of subject-matter defined in enclosed independent claims. Dependent claims describe preferred embodiments.

There is disclosed a method of determining a schedule for a shop floor. The shop floor comprises a plurality of automated machine arrangements, each machine arrangement being associated to one or more transfer stations and/or one or more transfer stations being associated to a machine arrangement and/or each of the machine arrangements. The shop floor also comprises a plurality of transport devices being controllable to move containers for material between transfer stations of and/or associated to the machine arrangements and/or of one or more buffer areas.

The method comprises receiving order information representing one or more orders, the order information indicating a number of units of a final product to be produced for each of the one or more orders. The method also comprises determining a schedule for operating one or more of the transport devices and one or more of the machine arrangements based on generating transport options pertaining to the order information. Moreover, the method comprises providing the schedule for automated execution. An automated machine arrangement may be a robotic system and/or be controllable by a controlling system, e.g., for productive operation and/or to access material containers at transfer stations and/or to perform one or more unproductive operations.

Automated execution of a schedule may be controlled or controllable by a controlling system, in particular a Manufacturing Execution System (MES), which may control the transport devices and/or machine arrangements. The inventive method allows efficient management of the shop floor and manufacturing by it, and/or automated control, which may in particular make human intervention superfluous at least for regular operation. The schedule may be selected and/or determined based on one or more optimization criteria, e.g., from one of a set of possible series or chains of transport options. The method may be performed by a control system or control device like a controlling system and/or a scheduling system.

It may be considered that the transport options may be generated based on first transports of input material pertaining to each order. A first transport may pertain to transporting externally provided initial input material or materials, and/or associated containers, for a first production operation, and/or a representation thereof. This allows anchoring of the scheduling determination to the order/s and may define potential series or chains of possible transport options, for efficient processing.

The schedule may be generated based on dynamically defined productive operations, wherein a productive operation may be defined such that for a machine arrangement, a productive operation may comprise processing leading to a full container of output material and/or at least one empty container of input material. For different products and/or machine arrangements and/or orders, different productive operations may be defined. A productive operation may be defined for a schedule determination; for different iterations or updates or determinations of a schedule, different productive operations may be defined. Accordingly, operation of a machine arrangement may be controlled to perform processing of a lot size with more than one unit, which may provide low signaling overhead when executing the schedule and/or may optimize the schedule and/or its determination.

In some variants, the schedule may be generated based on selecting a series and/or chain of transport options leading and/or productive operations to fulfillment of one or more of the orders. The series and/or chain may be selected based on one or more optimization criteria. This may provide processing efficiency.

The method may comprise receiving feedback pertaining to execution of the schedule. The feedback may be received during, and/or based on execution of the schedule. This may provide information for adaptive changes and/or reaction to actual or simulated operation.

It may be considered that the method comprises updating the schedule. The schedule may be updated based on feedback received. Updating the schedule may comprise determining a new extended (e.g., extended in time and/or extended for covering one or more additional and/or updated order/s) schedule, for example based on generated transport options and/or feedback and/or new order information, if available. The method may be dynamically adapted and/or may accommodate deviations from an earlier schedule, e.g., due to delays and/or unplanned occurrences during execution.

The schedule may pertain to a configurable planning horizon. The planning horizon may in general define a time interval and/or duration for which the schedule is valid and/or operation of the shop floor is intended to follow the schedule. Updating may be performed during and/or after the planning horizon, and/or may pertain a later time interval and/or planning horizon, which may have the same or different duration. The configuration of the planning horizon may be an input parameter, and/or may be dynamically and/or automatically adapted based on order information and/or operation conditions. A rolling planning horizon may be utilized, which may be shifted forward in time, e.g., for each iteration, and/or stepwise and/or continuously.

It may be considered that the method may comprise executing the schedule. A computer program product and/or software may comprise an execution module for executing the schedule. In some cases, the execution may be controlled separately. It may be considered that the schedule is executed for operating a shop floor, and/or in the context of a simulation, for example for providing manufacturing time estimates and/or for simulating operation with long planning horizon. In general, an integrated approach may be considered, in which a schedule may be determined and/or updated based on feedback, in particular based on feedback on performed execution and/or operation, and/or new and/or updated orders.

In general, the schedule may be determined based on a time-based control of one or more machine arrangements and/or one or more transport devices. Alternatively, or additionally, the schedule may be determined based on a predecessor-based control of one or more machine arrangements and/or one or more transport devices. A controlling system may be adapted for corresponding control. In some cases, different control approaches may apply to different machine arrangements and/or transport devices, e.g., such that one or more of the machine arrangements and/or transport devices may be controlled based on time, and one or more others based on predecessor. The method may thus accommodate either or both approaches.

It may be considered that the schedule may be determined such that transport options leading to deadlock are omitted. This provides well-performing schedules and/or may avoid undesired standstill.

There is also described a computer program product comprising computer code causing processing circuitry and/or a computer system to perform a method as described herein when executed by the processing circuitry and/or the computer system.

A storage medium storing a computer program product as described herein is also proposed. The storage medium may be computer-readable and/or may be non-volatile and/or nontransitory.

Moreover, there is described a controlling system for a shop floor, the controlling system being adapted for performing a method as described herein and/or executing a computer program product as described herein.

The controlling system may comprise a Manufacturing Execution System, MES, adapted for controlling execution of a schedule, and a scheduling system adapted for receiving information from the MES and/or one or more of the machine arrangements and/or transport devices and/or a transport control system. The scheduling system may also be adapted for determining the schedule and/or for providing the schedule to the MES. Thus, scheduling functionality may be provided separately, allowing for example upgrading existing systems by adding a scheduling system. However, variants in which MES and scheduling system are combined may be considered.

There is also described a shop floor comprising a controlling system as described herein.

The method may especially be carried out, completely or in part, by electronic execution means and/or a control device or system like a computer system, which may comprise processing circuitry and/or memory. To these ends, the method may be formulated as a computer program product with program code means, which may be stored on non-volatile and/or nontransitory memory or storage medium, which may be computer-readable. The above-described system may comprise the computer system. Advantages or features of the method may apply to the system and vice versa.

This system can be implemented by hardware, firmware and/or software or a combination of them.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary shop floor schematic using the invention; and
- Figure 2: shows an exemplary flow diagram of an inventive method.

### Detailed Exemplary Embodiments of the Invention

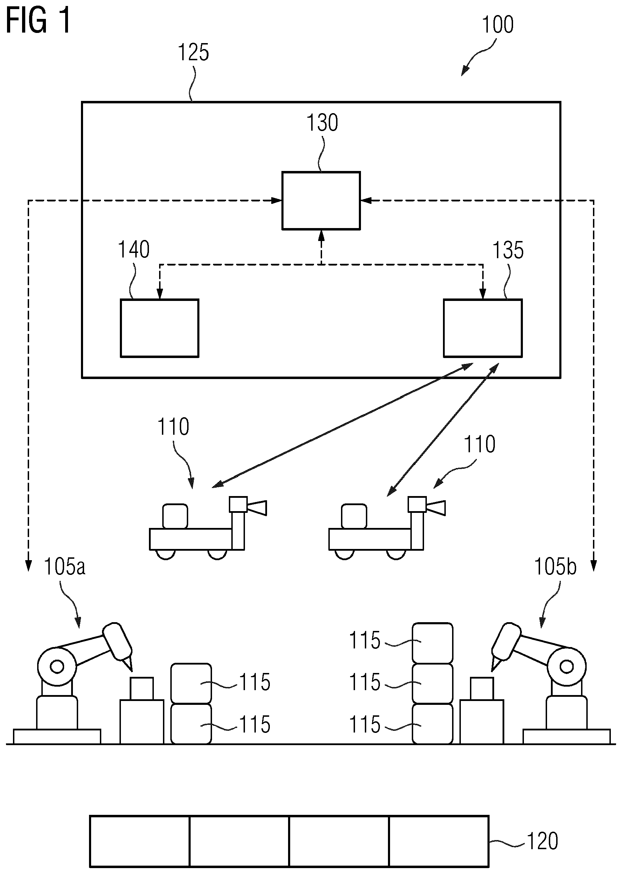

Figure 1 schematically shows an exemplary shop floor 100.

The shop floor 100 in general may be considered a manufacturing and/or processing environment or system, in particular a highly or fully automated environment or system. The shop floor 100 may be arranged in, and/or comprise, a building and/or one or more rooms or halls. It may be considered that a shop floor 100 may comprise different components, e.g., multiple machines or machine arrangements 105, and/or transport devices 110 for transporting material, in particular one or more AGVs (Automated Guided Vehicle). A shop floor 100 may comprise control devices and/or communication interfaces and/or monitoring devices, e.g., sensors like cameras and/or radar and/or lidar and/or scales, etc. A shop floor may be adapted to produce and/or manufacture one or more of different types of products, e.g., different electronics or mechatronics or toys or vehicles or mechanical products, or components of such products.

In general, a machine arrangement and/or machine 105 may be adapted for processing materials and/or manufacturing. A machine arrangement 105 may comprise one or more machines and/or processing devices, e.g., one or more tools and/or robots. A machine and/or machine arrangement 105 may be electronically and/digitally controlled and/or controllable, and/or may comprise one or more control devices and/or communication interfaces and/or monitoring devices. A machine or machine arrangement 105 may provide, e.g., via processing and/or manufacturing, an output material (e.g., in a lot size of a number of units) based on one or more input materials. A machine or machine arrangement 105 may receive information and/or instructions, e.g., for performing manufacturing and/or processing and/or one or more production steps or productive operation for such.

It may be considered that a machine or machine arrangement 105 may be controlled or controllable by a controlling system like a MES, to perform one or more production steps. Production steps may be steps of processing and/or manufacturing and/or movement, e.g., performed on input material/s or a unit thereof, to produce an output material. A machine or machine arrangement 105 may be adapted, and/or comprise facilities, to move material, e.g., input material from and/or output material to a transfer station 115.

Material may be input material or output material. Input material in general may be processed or unprocessed (raw) material, e.g., metal, ore, mechanical components, electronic components, optical components, etc. Different input materials may be provided to a machine or machine arrangement 105. Material may comprise one or more instances (units) of one type of material. Output material may be processed material. Material may comprise one or more instances (units) of one type of material. A unit of material may be standardized to be of the same type, and/or size, and/or weight, and/or composition. For example, multiple units of one material may comprise multiple electronic components of the same type, or multiple bars of metal of the same size. Input material for a machine arrangement 105 may be provided externally, e.g., via a buffer 120, or in the form of output material from a preceding processing of the shop floor 100.

Processing and/or manufacturing may for example comprise one or more of applying one or more tools to input material/s, and/or performing one or more forming steps, and/or combining of different components (e.g., different input materials), and/or coating, and/or lasering, and/or painting, and/or welding, etc. Processing and/or manufacturing may comprise moving material, in particular within the machine arrangement 105 and/or to or from a transfer station 115 and/or a container.

Output material for one machine or machine arrangement 105 may be input material for another machine or machine arrangement 105 with different processing and/or manufacturing setup, e.g., for further processing. Output material not intended for further processing by a shop floor machine arrangement 105 and/or the shop floor 100 may be considered a product or final product of the shop floor 100, which may be provided to a buffer, e.g., for removal and/or delivery to an external location. Input material that is intended as output material for further processing may be considered an intermediate product.

A shop floor 100 may comprise and/or be controlled or controllable by a controlling system 125, which may for example comprise a MES (Manufacturing Execution System) 130. A controlling system 125 and/or MES 130 may comprise one or more control devices and/or software component/s. The controlling system 125 and/or MES 130 may be adapted to receive monitoring information from shop floor sensors and/or machine arrangements 105 and/or from transport device like AGVs 110 and/or other sources, for example a transport control system 135 and/or external sensors, for example drone sensors and/or sensors arranged in a building housing the shop floor.

The controlling system 125 may be adapted to control, and/or provide instructions, to one or more machine arrangements and/or machines 105, e.g., via suitable communication interface/s (communication via communication interfaces is indicated with dashed lines in Figure 1). Control may be based on an operation schedule, which may be determined by the controlling system 125, for example a scheduling system 140 and/or the MES 130; the MES 130 may comprise the scheduling system 140, or it may be implemented as a separate control device or process, which may be in communication with the MES 130, and/or one or more other components of the controlling system 125 and/or the shop floor 100.

The scheduling system 140 may receive information regarding and/or representing an order and/or operational state of the shop floor and/or individual subsystems (like the transport control system 135 and/or transport devices 110). Information may for example provided by the MES 130, and/or from one or more other components or subsystems, e.g., directly from the transport control system 135 and/or transport devices 110, and/or the machine arrangements 105, and/or a supervisor system, if such is implemented, for example to centrally monitor and/or control and/or evaluate the machine arrangements 105 and/or transport subsystem (e.g., AGVs 110 and/or transport control system 135).

The MES 130, and/or the transport control system 135 and/or the scheduling system 140 may comprise one or more software components and/or modules and/or computer program products. A software or computer program product module may be provided for each action performed by a software. Figure 1 shows a centralized version of communication and control, but other architectures may be considered.

A shop floor 100 may comprise and/or have access to one or more buffer areas (also referred to as buffers) 120, where input material may be delivered, and intermediate and final products may be stored. In particular, initial input material may be delivered to a buffer 120, which may be externally supplied to fulfill an order, and/or may be automatically requested based on an order. It may be assumed that a shop floor 100 may be informed about materials needed to fulfill an order (providing the desired number of units of a final product indicated in the order), e.g., based on the order and/or on information otherwise available, e.g., in a bill of process and/or database.

Material may generally be provided to and/or from transfer stations 115 in containers. A container may be adapted to be able to contain a specific number of material units; different container types may be used for different materials, for example to allow ease of access for machines and/or robots. Containers of input material may be pre-prepared and/or provided at a buffer 120. The number of units of material for a container or container type may be pre-defined and/or fixed, e.g., for one or more types of material. For example, each container having the same input material may have, or be intended to have, the same number of units of this material. The number of units of output material may be dependent on the input material provided and/or a scheduling and/or an order. In some cases, a container with leftover input material may be transported below its intended number of units, e.g., if not all material has been needed to produce a desired number of output material units.

In general, outside of machines and/or machine arrangements 105, transport or movement of material may be in containers. A machine or machine arrangement 105 may be adapted to remove material from a container, and/or place material into a container.

Transport of containers containing material (or empty) may be provided using transport devices 110 like robots and/or AGVs. Transport devices 110 may be automated, e.g., remotely controlled by a transport control system 135 and/or independently controlled. Sensor input may be basis for transport control. It may be referred to transport to machines for brevity, which may be construed to mean transport to a transfer station of a machine. Machine and machine arrangement may be used interchangeably.

A transfer station 115 may be adapted to receive and/or store a container, and/or make a container accessible for a transport device 110 and/or a machine or machine arrangement 105. The transfer station 115 may comprise facilities to receive and/or provide and/or store and/or lift up and/or lift down and/or move a container. To a machine or machine arrangement 105, or buffer area 120, there may be associated one or more transfer stations 115. Different numbers of transfer stations 115, and/or different transfer stations 115, may be associated to different machine arrangements 105 and/or different buffers 120.

In general, a transfer station 115 may be a (usually automated) handover point, where AGVs 110 can pick up or drop off containers. A machine 105 may have access to these stations and may use or deposit material in the containers there, e.g., if the station 115 is not part of a buffer 120. Each transfer station 115 may be adapted to accommodate one container. A transfer station may be for input material, or output material, or both, for example at different points in time and/or for different types of material.

This may depend on facilities for movement of material to and/or from a container associated to a machine or machine arrangement 105. In some cases, different transfer stations may be suitable for different types of containers. It may be considered that a transfer station is separately operable, and/or it may be controllable by the controlling system 125. In some cases, a transfer station 115 may comprise one or more sensors, to provide information or feedback to the controlling system 125, e.g., regarding containers and/or container content and/or container fill level, and/or status of AGVs 110 and/or a machine or machine arrangement 105, in particular the one it is associated to.

An order and/or order information may specify and/or indicate a certain number of units of a required final product and/or corresponding input material needed to provide the final product, and/or a number of containers providing at least the needed input material/s. Different orders may specify or indicate or pertain to different types of products and/or different unit numbers. To assemble one unit of such a product, a BOP (bill of process) may specify the production steps which must be performed.

These steps can require additional input material, and it may be possible to specify whether steps can be performed sequentially or in parallel. The BOP can also be flexible (e.g., the sequence of some steps may not be fixed). The production steps may be modeled in such a granularity that one production step for a unit of an order can be processed unit by unit. Performing several steps on one unit before working on the next one may not be necessary.

Commissioned (e.g., initial) input material in appropriate containers for each order may be delivered externally to one of the buffers 120, e.g., from a loading station and/or a warehouse.

Each step in the bill of process may be executed on one machine for all units of an order. In some cases, there may be several machines or machine arrangements 105 which may execute a step, but a specific one may have to be picked to perform this step for each unit of an order.

It may occur that not all required input materials for one order fit into one transport container. Consequently, several containers might be needed to store or provide all required input materials of a certain type or output materials of some production step. Moreover, input material may in some cases not be commissioned in matching batches (for example, input capacity of x units in one container, y in another, and/or output capacity of z), and the input commissioning may also vary from order to order. For example, there may occur two input materials for one production step in one container for a small order, and two containers with different materials for a larger order. Thus, organizing the supply with input material and making sure that space for output containers is available without too much idle time on the producing machine may be a highly nontrivial problem.

There are proposed approaches of efficiently managing automatic shop floor execution in an integrated manner, which may avoid resorting to multi-step planning processes. An automatically executable schedule for the shop floor may be provided, for example during execution, or in advance using a simulation. It should be noted that the ability to manage a shop floor may also include the ability to react to a changing environment (for example, a new machine might become available, an AGV might be unavailable due to charging, some operation might take shorter or longer than anticipated, or something similar may occur). Thus, more than just generating one production execution plan (schedule) in advance may be advantageous.

A controlling system or central system (like a MES) 130 may trigger most or all operations necessary for the production to run, e.g., it may trigger and/or control one or more productive operations and/or unproductive operations for one or more machines. This may comprise the execution of a certain productive step or productive operation of a machine or machine arrangement 105 using input from prescribed transfer stations 115, and providing output to some transfer station 115, as well as a transport of some container from one transfer station 115 to another or to a buffer 120, or an "empty drive" which may be needed for an AGV 110 to get to a start location of a transport.

While there may be a separate system 135 that handles the details of AGV moves (like SIMOVE), the central system 130 may be responsible for having an overview and/or monitor what is currently processed, what is finished and what can and shall be processed next, for example based on information provided by transfer stations 115 and/or machines 105 and/or other sensors. In particular, a productive operation may be instructed to be carried out, wherein a productive operation may be based on a dynamic definition according to a schedule. In general, the schedule may indicate a definition of a productive operation.

Determining and providing a schedule to manage the entirety of the production process is described, wherein the schedule may indicate when and how to supply the relevant material, which may be determined long before the actual start of the production step.

A bill of process in this context may be dynamic or static. For example, a fixed database may be utilized, which may detail which steps need to be done for a product and which machines can perform a certain step (maybe with additional setups); alternatively, a dynamic system may be used (e.g., a knowledge-graph base system), which can make recommendations what can be done where.

Variations which do not fundamentally change the scenario described above may be considered. This might be partially automated versions or further restrictions. For example, if some transports are done by a human operator instead of an AGV 110, this can obviously be incorporated as long as there is an interface where the operator can generate the necessary signals that an AGV system 135 would generate (e.g., "transport completed"). Another example is use of transfer stations 115 which are not suitable for all container types.

Shop floor execution may be based on a plan or schedule which is generated in advance. Usually, the process starts with using some scheduling tool to generate a schedule as a basis. However, that plan may not have the necessary level of detail for automated shop floor processing, for example the required logistics may be not considered in adequate depth: Commercial scheduling tools (like Opcenter APS) tend to focus on long-term planning which considers "unproductive" operations like transports or product-dependent setups either as standardized prescribed time windows which block the product for a certain amount of time, or not at all.

Converting a rough plan which just schedules time windows for orders on machines and unproductive time windows for transfers to a detailed instruction how the actual shop floor execution can look like is usually done in a second step by a human operator. Therefore, such a schedule cannot really be used for automatically triggering production operations. It rather serves as a guideline for a human operator who is still responsible and in charge of triggering the upcoming production processes and reacting to changes which can occur in case of unforeseen events or simply due to wrong assumptions of the base schedule which didn't consider all necessary logistic details.

It may generally be assumed that there is a regular communication with the system(s) responsible for AGV operation (either directly or via MES) and that this system can answer requests and accept directions what should be done when.

Transport-Driven Production Execution Planning or scheduling is proposed. In particular, specific transport requirements may be considered. The complexity of material supply and the fact that transport resources are also limited may be considered. In particular, inefficient transport planning leading to frequent waiting times on machines because of missing input material or missing output space may be limited or avoided. Accordingly, efficient usage of production resources like AGVs and machines may be facilitated, which relates to optimization of the overall number of fulfillable orders per time.

A scheduling method for a shop floor is proposed, which may be performed by a scheduling system, and/or may be implemented as, and/or controlled by a computer program product. The scheduling system may in particular be a computer system and/or comprise processing circuitry and/or memory for performing the method. The shop floor may be a shop floor as described herein, in particular in the context of Figure 1.

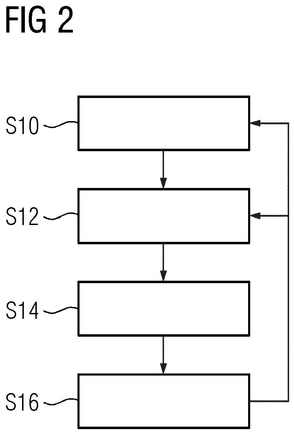

A schematic flow diagram of the inventive method is shown in Figure 2.

The method may comprise an action S10 of receiving order information pertaining to one or more orders, and/or a bill of process. The bill of process may represent capabilities of machine arrangements of the shop floor. The order information may be provided by a central control system, in particular a MES. The order information indicates, for at least one pending order, a number of units of a final product to be produced. Order information may indicate initial input material, and/or a location (e.g., buffer and/or transfer station of a buffer) of the container/s providing initial input material for the order, and/or a time limit for fulfilling the order. A computer program product and/or software may comprise a receiving module for performing action S10.

In an action S12, a schedule may be determined based on transport options and/or based on generating transport options; a transport option may be generated based on, and/or pertaining to the order information. This may include considering initial input material information, and/or time limit information, e.g., as indicated by the order information. The required initial input material may be determined based on the final product and/or from order information. It should be noted that some initial input material may not necessarily be for initial use or transport, but may be intended for further processing steps, e.g., to be used after one or more productive operations have been performed for an order. A computer program product and/or software may comprise a determining module for performing action S12.

In action S14, the schedule may be provided for execution, e.g., to controlling system or a component thereof, e.g., an MES. Providing for execution may comprise transmitting the schedule to another system, e.g., an MES, and/or executing the schedule, for example controlling the shop floor, and/or one or more transport devices and/or one or more machine arrangements according to the schedule. A computer program product and/or software may comprise a providing module for performing action S14.

In an optional action S16, feedback from the shop floor may be received, e.g., feedback from the MES and/or central system, and/or one or more machine arrangements, and/or one or more transport devices, and/or a transport control system. Feedback may represent sensor information, and/or monitoring information, and/or status information (e.g., whether a production operation or transport has been completed), and/or error information, and/or one or more new and/or updated orders. An updated or new schedule may be determined, returning to action S10, or S12 (e.g., if no new order information is available); the (e.g., updated or new) schedule may be determined based on the feedback, which may for example exclude one or more transport options, and/or change timing. A computer program product and/or software may comprise a feedback reception module for performing action S16.

A transport option may represent a possible transport or movement of a transport device to fulfill an order, e.g., to provide input material and/or move output material, and/or suitably position the transport device, e.g., to fulfill the final product/s of the order. A transport option may be based on one or more initial transport options, e.g., of initial input material provided at a buffer, as provided externally for fulfilling the order. The schedule may be based on processing orders and/or transport options associated to orders, in sequence, or at least partly in parallel, e.g., depending on the bill of process, and/or the available machines, and/or transport capacity, and/or available material. A transport option may be determined based on a productive operation definition, which may be dynamically determined as described herein, e.g., during determining the schedule and/or depending on transport options. A transport option may generally represent a transport possible to fulfill an order; this may for example limit potential initial transport options, as only one or a few potential initial processing steps and/or productive operations may be available. An unproductive operation may generally be an operation that may not directly be involved in processing material, but may be needed, e.g., for intermediate storage and/or setup or positioning of a machine arrangement or transport device, or maintenance, or monitoring, or communication.

Transport options may be successively derived based on one or more potential initial transport options.

A transport driven decision management is proposed, to determine the schedule. Possible transport options may be provided, and productive operations may be planned and/or executed as soon as all necessary criteria (e.g., enough input material and output space) are fulfilled. All possible transport options (e.g., in the context of pending orders) may be provided, and the most promising one may be selected, e.g., based on one or more optimization criteria and/or timing demands for one or more orders. It may be considered that the schedule is determined based on production operations determined based on transport options, and/or an order.

The schedule may represent and/or comprise, at least in part, instructions to actualize a number and/or series of transport options. A transport option in general may indicate a transport device, and/or a timing, and/or a start for a transport, and/or a target, and/or whether and/or which container to transport, and/or a path to take, and/or potential co-pending traffic or movement by other transport devices. A start or target may in particular correspond to a transfer station. The schedule may also represent and/or comprise instructions for productive and/or unproductive operation and/or associated processing steps for one or more machines or machine arrangements.

Generating transport options may be based on one or more of the following:
- full output containers may be transported to a buffer or to a next machine. All possible options may be considered if there is more than one machine available for further processing of output (e.g., a "next machine" for the order may not yet be specified;
- if transporting (input) material to a machine or transfer station has already started and/or finished (e.g., in the representation used for determining the schedule), only material for the corresponding order on this machine may be considered, until all input material required for this step is accounted for in the plan or schedule. Otherwise, material transports to the machine for all possible candidate orders may be considered;
- deadlock may be avoided. In this context, not all possible transports may be suggested. Otherwise, a situation may occur in which neither a productive operation nor transport of the required input material may be executed. As a simple example, enough space to be able to get at least one container for each input material and one space for output material needs to be available. In this context, further constraints may be considered. For example, some machines may have dedicated input or output transfer stations, while others may be flexible in that regard; it may be considered that some transfer stations may only accommodate certain types of containers.

The decision for the first transport of an order may determine the order sequencing on the machine. Thus, the evaluation which of these transports should be planned may be based on criteria for productive options in a "classical scheduling approach", but of course there may be additional transport-related decision criteria as well.

Depending on the planning horizon, to not plan anything and wait instead is always an option as well, e.g., for one or more machines and/or transport devices.

In general, the schedule may be dynamically updated, and/or performed repeatedly. The planning horizon of the scheduling (e.g., the time interval for which the scheduling is to be followed or executed by the shop floor) may be predetermined, and/or adapted dynamically, e.g., based on an order, and/or final product. For example, some products may intrinsically demand longer processing than others; correspondingly, a longer planning horizon may be used. The planning horizon can for example be 5 minutes or less, or 10 minutes or less, or 60 minutes or less. Alternatively, or additionally, the planning horizon may be shorter than the execution time for one of the orders, and/or such that at least one schedule update is performed when executing one of the orders (e.g., from providing initial input material to providing the desired final product). During execution of a schedule, an updated schedule may be determined for a succeeding time interval or planning horizon.

For scheduling, a lot size one may be considered, planning one operation for producing a unit on a machine. This corresponds to a time window where the machine is blocked. Unproductive operations like a setup may be added. For larger lot sizes, one time window for producing several units may not be enough: If a production operation is communicated as one item, it may need to be executable after a fixed set of other (predecessor) operations is finished. Since the number of transfer stations and thus the number of slots for input and output containers is limited, it may not be possible to create or schedule a situation beforehand, where all units of one order can be produced without executing other operations in between (e.g., replenishing input, or removing an output container to free up space for a new one.

On the other hand, unnecessary communication between systems (in this case, between the executing machine and the MES) may create undesirable communication overhead. Instead of treating each unit individually, a productive operation may be defined as the maximum number of unit execution steps for an order which use a fixed set of transfer stations for input and output material. After a productive operation, there may be a full output container, and/or an empty input container; the productive operation may be defined correspondingly. Accordingly, dynamically generating the productive operations for an order on a machine is proposed, based on which input will be available where and which transfer stations are free for output usage.

This approach may minimize the necessary amount of communication and/or may be compatible with every sequence in which input containers are driven to the machine (provided deadlocks are avoided in transport planning). In particular, it may not be necessary to decide, before planning transports, whether to first use material, that can be transported directly from a previous machine, or material which is already in a buffer for intermediate storage. In general, the schedule may be determined based on defining one or more productive operations, and/or based on thus-defined productive operations. It may be considered that a productive operation may be defined based on transport options and/or be dynamically defined.

These concepts are compatible with a shop floor management system which knows the current state and plans all necessary operations for shop floor operation for a configurable time horizon, which may react to, and incorporate extensions and reductions in execution times of an operation. Since the planning horizon is not fixed, they can also be used to plan ahead for longer time horizons (e.g., to estimate finishing times of an entire order).

One iteration of the process or method may comprise the following action S16: receiving feedback from the MES, generating all currently plannable options (transport and productive options as described above) based on the feedback. Next, the system may decide which option and/or options and/or set of options to take based on how the plan which extends the current choices by including the new option/s or set would look like.

In this action, additionally necessary unproductive operations like setups or storage at the buffers may be included, and the schedule may be based on this consideration. The best choice (which can also be to do nothing) may then fixed or decided on, to determine the schedule. A certain schedule may be determined, but the schedule or determined times or timing may still change based on future MES feedback.

Incorporating changed times (of operation and/or transport, for example) may help making better decisions or improving scheduling. For example, if a machine or AGV is still busy due to some delay during execution of the schedule, an update may consider using alternative free resources.

The MES can either work on a time-based or on a predecessor-based structure. That means, after all systems synchronize their time in the beginning, the concept and approaches are compatible with a triggering system which either starts a new operation after all predecessors (which may be communicated to the MES) are finished, or at a specified time. Especially for the second variant, the management software or scheduling system may adapt to changes in estimated times. Already taken timing decisions of the schedule may be reviewed and/or changed and/or compensated for, based on feedback from the MES which operations finished when. The schedule may be based on information provided about a status of the shop floor, and/or one or more machines, and/or one or more transfer stations, and/or one or more transport devices. For predecessor-based MES, adaption capabilities facilitate making good decisions in a changing environment, represented in an efficient schedule.

Using dynamically defined productive operations may avoid large communication overhead (since otherwise, the MES would have to trigger each operation separately, and also may have to wait for the feedback that the operation was finished). Moreover, internal optimizing processes (like parallelizing the physical manipulation of the workpiece and retrieving the next raw material) is facilitated.

The approaches described allow efficiently dealing with nonunit lot sizes and formulating a method for automated shop floor operation in the form of an executable schedule, which in particular may be executable without intermediate human interaction. Work in progress may be reduced, e.g., reducing the amount of material standing somewhere on the shop floor and waiting to be processed, and/or reducing production cycle times of customer orders.

In contrast to a human operator, the described approaches are automated and adaptive, may optimize resource usage. In addition to operating the execution level on the shop floor, the method may also be used to create mid- and long-term production plans or schedules with integrated logistics. To this end, a shop floor simulation may be used, which just does as estimated in the planning steps. This simulation may take the role of the shop floor on the MES side and is easy to implement. Such a schedule can be useful for capacity planning or delivery date estimation and is more precise than classical scheduling tools which only consider logistics in a second step or not at all.

A control device or system may comprise circuitry, which may comprise integrated circuitry. Processing circuitry may comprise one or more processors and/or controllers (e.g., microcontrollers), and/or ASICs (Application Specific Integrated Circuitry) and/or FPGAs (Field Programmable Gate Array), or similar. It may be considered that processing circuitry comprises, and/or is (operatively) connected or connectable to one or more memories or memory arrangements. A memory arrangement may comprise one or more memories. A memory or storage medium may be adapted to store digital information. Examples for memories or storage media comprise volatile and non-volatile memory or media, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM).

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

## Claims

1. Method of determining a schedule for a shop floor (100), the shop floor (100) comprising a plurality of automated machine arrangements (105), each machine arrangement (105) being associated to one or more transfer stations (115), a plurality of transport devices (110) being controllable to move containers for material between transfer stations (115) of the machine arrangements (105) and/or of one or more buffer areas (120), the method comprising:
- receiving (S10) order information representing one or more orders, the order information indicating a number of units of a final product to be produced for each of the one or more orders;
- determining (S12) a schedule for operating one or more of the transport devices (110) and one or more of the machine arrangements (105) based on generating transport options pertaining to the order information;
- providing (S14) the schedule for automated execution.

2. Method according to claim 1, wherein the transport options are generated based on first transports of input material pertaining to each order.

3. Method according to one of the preceding claims, wherein the schedule is generated based on dynamically defined productive operations, wherein a productive operation is defined such that for a machine arrangement (105), a productive operation comprises processing leading to a full container of output material and/or at least one empty container of input material.

4. Method according to one of the preceding claims, wherein the schedule is generated based on selecting a series of transport options and/or productive operations leading to fulfillment of one or more of the orders.

5. Method according to one of the preceding claims, the method further comprising receiving feedback pertaining to execution of the schedule.

6. Method according to one of the preceding claims, the method comprising updating the schedule.

7. Method according to one of the preceding claims, wherein the schedule pertains to a configurable planning horizon.

8. Method according to one of the preceding claims, wherein the method comprises executing the schedule.

9. Method according to one of the preceding claims, wherein the schedule is determined based on a time-based control of one or more machine arrangements (105) and/or one or more transport devices (110), and/or wherein the schedule is determined based on a predecessor-based control of one or more machine arrangements (105) and/or one or more transport devices (110).

10. Method according to one of the preceding claims, wherein the schedule is determined such that transport options leading to deadlock are omitted.

11. Computer program product comprising computer code causing processing circuitry and/or a computer system to perform the method according to one of claims 1 to 10 when executed by the processing circuitry and/or the computer system.

12. Storage medium storing a computer program product according to claim 11.

13. Controlling system (125) for a shop floor (100), the controlling system (125) adapted for performing a method according to one of claims 1 to 10.

14. Controlling system (125) according to claim 13, wherein the controlling system (125) comprises a Manufacturing Execution System (130), MES, adapted for controlling execution of a schedule, and a scheduling system (140) adapted for receiving information from the MES (130), determining the schedule and for providing the schedule to the MES (130) .

15. Shop floor (100) comprising a controlling system (125) according to one of claims 13 and 14.
